# EUROPÄISCHE PATENTSCHRIFT

(11) **EP 2 066 583 B1**
(45) Veröffentlichungstag und Bekanntmachung des Hinweises auf die Patenterteilung: **24.11.2010**
(21) Anmeldenummer: 07803556.5
(22) Anmeldetag: 19.09.2007
(51) Int. Cl.: C01B 7/04, B01J 8/18, B01J 8/24, B01J 8/34, B01J 19/32

(54) **VERFAHREN ZUR HERSTELLUNG VON CHLOR IN EINEM WIRBELSCHICHTREAKTOR**
METHOD FOR PRODUCING CHLORINE IN A FLUIDIZED BED REACTOR
PROCÉDÉ POUR PRODUIRE DU CHLORE DANS UN RÉACTEUR À LIT FLUIDISÉ

(30) Priorität: 19.09.2006 EP 06120886
(43) Veröffentlichungstag der Anmeldung: 10.06.2009
(73) Patentinhaber: BASF SE, 67056 Ludwigshafen (DE)
(72) Erfinder: SEIDEMANN, Lothar, 68169 Mannheim (DE); KARCHES, Martin, 67434 Neustadt (DE); STÜTZER, Dieter, 67373 Dudenhofen (DE); SESING, Martin, 67165 Waldsee (DE); SCHUBERT, Olga, 67063 Ludwigshafen (DE); URTEL, Heiko, 68165 Mannheim (DE)
(86) Internationale Anmeldenummer: PCT/EP2007/059870
(87) Internationale Veröffentlichungsnummer: WO 2008/034836

(56) Entgegenhaltungen:
- WO-A-2005/077520
- WO-A-2005/092488
- US-A- 5 112 593

## Beschreibung

Die Erfindung betrifft ein Verfahren zur Herstellung von Chlor nach dem Deacon-Verfahren in einem Wirbelschichtreaktor, wobei ein gasförmiges Reaktionsgemisch, enthaltend Chlorwasserstoff und Sauerstoff, über einen heterogenen, partikelförmigen, eine Wirbelschicht ausbildenden Katalysator von unten nach oben geleitet wird.

Als Deacon-Verfahren bezeichnet man in bekannter Weise das vom englischen Chemiker Henry Deacon im Jahre 1868 zum Patent angemeldete Verfahren zur Herstellung von Chlor durch Oxidation von Chlorwasserstoff mit Sauerstoff. Die Reaktion ist exotherm, mit einer Reaktionsenthalpie von -114,8 kJ/mol, und ist eine Gleichgewichtsreaktion, d. h. die Umsetzung verläuft nicht vollständig, wobei der Gleichgewichtsumsatz mit steigender Temperatur abnimmt. Um eine für industrielle Anwendungen ausreichend hohe Reaktionsgeschwindigkeit zu gewährleisten, ist es jedoch erforderlich, die Reaktionstemperatur auf mindestens 450 °C zu erhöhen. Bei diesen Temperaturen sind die von Deacon gefundenen Katalysatoren auf der Basis von Kupfer jedoch nicht stabil.

Es gab daher zahlreiche Weiterentwicklungen, insbesondere für Katalysatoren mit hoher Aktivität bei möglichst niedriger Temperatur. Hierzu zählen beispielsweise Katalysatoren auf der Basis von Chrom, erhalten durch Kalzinieren einer Verbindung, die ihrerseits durch Reaktion von Chromnitrat, Chromchlorid und dem Chromsalz einer organischen Säure mit Ammoniak oder durch Kalzinieren der Mischung der Verbindung und einer Siliziumverbindung, vorzugsweise bei einer Temperatur unterhalb von 800 °C, erhalten wird, wie in US 4,828,815 beschrieben.

Andere, bei niedrigen Temperaturen effektive Katalysatoren basieren auf Rutheniumverbindungen, insbesondere Rutheniumchlorid, bevorzugt aus einem Träger, wie beispielsweise in GB-B 1,046,313 beschrieben. Weitere Ruthenium-basierte Katalysatoren für das Deacon-Verfahren sind Rutheniumoxid-Trägerkatalysatoren oder Trägerkatalysatoren des Rutheniummischoxid-Typs, wobei der Gehalt an Rutheniumoxid 0,1 bis 20 Gew.-% beträgt und der mittlere Teilchendurchmesser von Rutheniumoxid 1,0 bis 10,0 nm, entsprechend der DE-A 197 48 299.

Der Einsatz eines Wirbelschichtreaktors zur Durchführung der Deacon-Reaktion unter Verwendung von geträgerten Kupferverbindungen als Katalysator ist in J.T. Quant et al.: The Shell Chlorine Process, erschienen in The Chemical Engineer, July/August 1963, pages CE 224 - CE 232, beschrieben.

WO 2005/092488 A offenbart ein Verfahren zur Herstellung von Chlor in einem Wirbelschichtreaktor, in dem ein gasförmiges Reaktionsgemisch, enthaltend Chlorwasserstoff und Sauerstoff, einen heterogenen partikelförmigen, die Wirbelschicht ausbildenden Katalysator von unten nach oben durchströmt. In der Wirbelschicht ist ein Trennboden angeordnet, der die Wirbelschicht in zwei vertikal im Wirbelschichtreaktor angeordnete Zellen aufteilt. Der Trennboden ist gasdurchlässig und weist Öffnungen auf, die einen Austausch des heterogenen, partikelförmigen Katalysators in vertikaler Richtung gewährleisten.

Es war demgegenüber Aufgabe der Erfindung, ein Verfahren zur Durchführung des Deacon-Verfahrens in einem Wirbelschichtreaktor zur Verfügung zu stellen, wonach eine verbesserte Ausbeute und Selektivität erreicht werden kann.

Die Lösung besteht in einem Verfahren zur Herstellung von Chlor in einem Wirbelschichtreaktor, wobei ein gasförmiges Reaktionsgemisch, enthaltend Chlorwasserstoff und Sauerstoff, einen heterogenen partikelförmigen, eine Wirbelschicht ausbildenden Katalysator von unten nach oben durchströmt, das dadurch gekennzeichnet ist, dass in der Wirbelschicht Einbauten angeordnet sind, die die Wirbelschicht in eine Mehrzahl von horizontal sowie eine Mehrzahl von vertikal im Wirbelschichtreaktor angeordneten Zellen aufteilen, mit Zellwänden, die gasdurchlässig sind und die Öffnungen aufweisen, die eine Austauschzahl des heterogenen, partikelförmigen Katalysators in vertikaler Richtung im Bereich von 1 bis 100 Litern/Stunde pro Liter Reaktorvolumen gewährleisten und dass die Einbauten als Kreuzkanalpackung ausgebildet sind, mit in vertikaler Richtung im Wirbelschichtreaktor parallel zueinander angeordneten geknickten gasdurchlässigen Metallblechen, Streckmetall- oder Gewebelagen, mit Knickkanten, die Knickflächen mit einem von Null verschiedenen Neigungswinkel zur Vertikalen ausbilden, und wobei die Knickflächen aufeinander folgender Metallbleche, Streckmetall- oder Gewebelagen den gleichen Neigungswinkel, jedoch mit umgekehrten Vorzeichen aufweisen und dadurch Zellen ausbilden, die in vertikaler Richtung durch Engstellen zwischen den Knickkanten begrenzt werden.

Der erfindungsgemäß eingesetzte Wirbelschichtreaktor weist, insbesondere bezüglich der Verweilzeit-Eigenschaften verbesserte Einbauten auf, wobei der heterogene partikelförmige Katalysator deutlich länger, um ca. 2 Zehnerpotenzen oder länger im Vergleich zur Gasströmung lokal verweilt. Dadurch wird der Stoffübergang verbessert und somit der Umsatz erhöht.

Es wurde gefunden, dass es wesentlich ist, die Wirbelschicht mittels Einbauten sowohl in horizontaler als auch in vertikaler Richtung in Zellen aufzuteilen, das heißt in von Zellwänden umschlossene Hohlräume, wobei die Zellwände gasdurchlässig sind und Öffnungen aufweisen, die in vertikaler Richtung im Wirbelschichtreaktor einen Feststoffaustausch erlauben. Darüber hinaus können in den Zellwänden Öffnungen vorgesehen sein, die einen Feststoffaustausch in horizontaler Richtung erlauben. Der heterogene partikelförmige Katalysator kann sich somit zwar in vertikaler Richtung und gegebenenfalls auch in horizontaler Richtung durch den Wirbelschichtreaktor bewegen, er wird aber in den einzelnen Zellen im Vergleich zu einer Wirbelschicht ohne dieselben zurückgehalten, wobei die oben definierten Austauschzahlen gewährleistet werden.

Die Austauschzahl wird durch den Einsatz von radioaktiv markierten Feststoff-Tracer-Partikeln bestimmt, die in das wirbelnde Reaktionssystem eingegeben werden, wie beispielsweise in: G. Reed "Radioisotope techniques for problem-solving in industrial process plants", Chapter 9 ("Measurement of residence times and residence-time distribution"), p. 112-137, (J.S. Charlton, ed.), Leonard Hill, Glasgow and London 1986, (ISBN 0-249-44171-3), beschrieben. Über die Aufnahme von Zeit und Ort dieser radioaktiv markierten Partikel kann die Feststoffbewegung lokal bestimmt und die Austauschzahl abgeleitet werden (G. Reed in: "Radioisotope techniques for problem-solving in industrial process plants", Chapter 11 ("Miscellanous radiotracer applications", 11.1. "Mixing and blending studies"), p. 167-176, (J. S. Charlton, ed.), Leonard Hill, Glasgow and London 1986, (ISBN 0-249-44171-3).

Durch die gezielte Auswahl der Geometrie der Zellen kann die Verweilzeit des heterogenen partikelförmigen Katalysators in denselben an die Charakteristik der jeweils durchzuführenden Reaktion angepasst werden.

Durch die Reihenschaltung einer Mehrzahl, das heißt insbesondere von 0 bis 100 Zellen oder auch von 10 bis 50 Zellen pro Meter Betthöhe, das heißt in vertikaler Richtung, in Richtung der Gasströmung von unten nach oben durch den Reaktor, wird die Rückvermischung begrenzt und damit die Selektivität und der Umsatz verbessert. Durch die zusätzliche Anordnung einer Mehrzahl von, das heißt von 10 bis 100 Zellen oder auch von 10 bis 50 Zellen pro Meter in horizontaler Richtung im Wirbelschichtreaktor, das heißt von Zellen, die parallel oder in Serie vom Reaktionsgemisch durchströmt werden, kann die Kapazität des Reaktors nach Bedarf angepasst werden. Die Kapazität des erfindungsgemäßen Reaktors ist somit nicht begrenzt und kann dem konkreten Bedarf angepasst werden, beispielsweise auch für Reaktionen im großtechnischen Maßstab.

Indem die Zellen Hohlräume umschließen, die den partikelförmigen heterogenen Katalysator aufnehmen, nimmt das Zellmaterial selbst nur einen begrenzten Teil des Querschnitts des Wirbelbettreaktors ein, insbesondere von nur etwa 1 bis 10 % der Querschnittsfläche des Wirbelschichtreaktors, und führt daher nicht zu den bei den Einbauten aus dem Stand der Technik bekannten, mit einer erhöhten Querschnittsbelegung verbundenen Nachteilen.

Der im erfindungsgemäßen Verfahren eingesetzte Wirbelschichtreaktor wird, wie üblich, von unten über einen Gasverteiler mit den gasförmigen Einsatzstoffen beaufschlagt. Beim Passieren der Reaktionszone werden die gasförmigen Einsatzstoffe an dem heterogenen partikelförmigen Katalysator, der durch die Gasströmung zum Wirbeln angeregt wird, partiell umgesetzt. Die partiell umgesetzten Einsatzstoffe strömen in die nächste Zelle, wo dieselben weiter partiell umgesetzt werden.

Oberhalb der Reaktionszone ist eine Feststoffabscheidevorrichtung vorgesehen, die mitgeführten Katalysator von der Gasphase trennt. Das umgesetzte Produkt verlässt den erfindungsgemäßen Wirbelschichtreaktor am oberen Ende desselben feststofffrei.

Darüber hinaus kann der erfindungsgemäß eingesetzte Wirbelschichtreaktor sowohl von unten als auch von der Seite zusätzlich mit flüssigen Edukten beaufschlagt werden. Diese müssen jedoch direkt an ihrer Zugabestelle verdampfen können, um die Wirbelfähigkeit des Katalysators zu gewährleisten.

Als Katalysatoren können die bekannten heterogenen, partikelförmigen, geträgerten oder ungeträgerten Katalysatoren für das Deacon-Verfahren eingesetzt werden, insbesondere Katalysatoren enthaltend eine oder mehrere Ruthenium-, Kupfer- oder Chromverbindungen.

Die Zellen sind in ihrer Geometrie nicht eingeschränkt; es kann sich beispielsweise um Zellen mit runden Wänden, insbesondere Hohlkugeln, oder auch um Zellen mit eckigen Wänden handeln. Bei einer eckigen Ausbildung der Wände ist bevorzugt, dass die Zelle nicht mehr als 50 Ecken aufweisen, vorzugsweise nicht mehr als 30 und insbesondere nicht mehr als 10 Ecken.

Die Zellwände in den Zellen der Einbauten sind gasdurchlässig ausgebildet, um durch ein Durchströmen der Gasphase durch die Zellen das Wirbeln des heterogenen partikelförmigen Katalysators zu gewährleisten. Hierzu können die Zellwände aus einem Siebgewebe gebildet sein oder auch aus flächenförmigen Materialien, die beispielsweise runde oder auch anders geformte Löcher aufweisen.

Hierbei beträgt die mittlere Maschenweite der eingesetzten Siebgewebe oder die bevorzugte Weite der Löcher in den Zellwänden insbesondere zwischen 50 und 1 mm, weiter bevorzugt zwischen 10 und 1 mm und besonders bevorzugt zwischen 5 und 1 mm.

Beispiele für Kreuzkanalpackungen sind die Packungen der Typen Mellpack^{®}, CY oder BX der Fa. Sulzer AG, CH-8404 Winterthur oder die Typen A3, BSH, B1 oder M der Fa. Monz GmbH, D-40723 Hilden.

In den Kreuzkanalpackungen bilden sich in vertikaler Richtung zwischen zwei jeweils aufeinander folgenden Metallblechen, Streckmetall- oder Gewebelagen, durch die geknickte Strukturierung derselben, Hohlräume, das heißt Zellen aus, die durch Engstellen zwischen den Knickkanten begrenzt werden.

Der mittlere hydraulische Durchmesser der Zellen, bestimmt mittels radioaktiver Tracertechnik, und die beispielsweise vorstehend in Verbindung mit der Bestimmung der Austauschzahl angegebenen Literaturstelle beschrieben ist, liegt bevorzugt im Bereich zwischen 500 und 1 mm, weiter bevorzugt zwischen 100 und 5 mm und besonders bevorzugt zwischen 50 und 5 mm.

Hierbei wird als hydraulischer Durchmesser in bekannter Weise die vierfache horizontale Querschnittsfläche der Zelle, dividiert durch den von oben betrachteten Umfang der Zelle, definiert.

Die mittlere Höhe der Zellen, gemessen in vertikaler Richtung im Wirbelbettreaktor mittels radioaktiver Tracertechnik, beträgt vorzugsweise zwischen 100 und 1 mm, weiter bevorzugt zwischen 100 und 3 mm und besonders bevorzugt zwischen 40 und 5 mm.

Die obigen Kreuzkanalpackungen belegen nur einen geringen Teil der Querschnittsfläche des Wirbelschichtreaktors, insbesondere einen Anteil von etwa 1 bis 10 % derselben.

Bevorzugt liegen die Neigungswinkel der Knickflächen zur Vertikalen im Bereich von 10 bis 80°, insbesondere zwischen 20 und 70°, besonders bevorzugt zwischen 30 und 60°.

Die Knickflächen in den Metallblechen, Streckmetall- oder Gewebelagen weisen bevorzugt eine Knickhöhe im Bereich zwischen 100 und 3 mm, besonders bevorzugt zwischen 40 und 5 mm, und einen Abstand der Engstellen zwischen den Knickkanten im Bereich zwischen 50 und 2 mm, besonders bevorzugt zwischen 20 und 3 mm, auf.

In die Zellen bildenden Einbauten können für eine gezielte Steuerung der Reaktionstemperatur Wärmeübertrager zwecks Zuführung von Wärme bei endothermen Reaktionen oder Abfuhr von Wärme bei exothermen Reaktionen eingebaut werden. Die Wärmeübertrager können beispielsweise plattenförmig oder rohrförmig ausgebildet sein und im Wirbelschichtreaktor vertikal, horizontal oder geneigt angeordnet sein.

Die Wärmeübertragungsflächen können auf die konkrete Reaktion abgestimmt werden; dadurch kann jede Reaktion wärmetechnisch mit dem erfindungsgemäßen Reaktorkonzept realisiert werden.

Die Zellen bildenden Einbauten werden bevorzugt aus Werkstoffen mit sehr guter Wärmeleitfähigkeit hergestellt, so dass der Wärmetransport über die Zellwände nicht behindert wird. Somit entsprechen die Wärmeübergangseigenschaften des erfindungsgemäßen Reaktors denjenigen eines herkömmlichen Wirbelschichtreaktors.

Die Werkstoffe für die Zellen bildenden Einbauten sollen darüber hinaus eine ausreichende Stabilität unter Reaktionsbedingungen aufweisen; insbesondere ist neben der Beständigkeit gegenüber chemischen und thermischen Belastungen auch die Beständigkeit des Werkstoffs gegenüber mechanischem Angriff durch den wirbelnden Katalysator zu beachten.

Aufgrund der einfachen Bearbeitbarkeit derselben sind Metall-, Keramik-, Polymer- oder Glaswerkstoffe besonders geeignet.

Die Einbauten sind bevorzugt dergestalt ausgebildet, dass sie 10 bis 90 Vol.-% der Wirbelschicht in Zellen unterteilen.

Hierbei ist bevorzugt der untere Bereich der Wirbelschicht in Durchströmungsrichtung des gasförmigen Reaktionsgemisches von Einbauten frei.

Besonders bevorzugt sind die Einbauten, die die Wirbelschicht in Zellen aufteilen, oberhalb der Wärmeübertrager angeordnet. Dadurch kann insbesondere der Restumsatz erhöht werden.

Durch die begrenzte Querschnittsbelegung durch die Zellen bildenden Einbauten weist der erfindungsgemäße Reaktor keine Nachteile hinsichtlich Entmischung und Austragsneigung des wirbelnden partikelförmigen Katalysators auf.

Die Erfindung wird im Folgenden anhand einer Zeichnung näher erläutert.

Es zeigen im Einzelnen:
- Figur 1: die schematische Darstellung einer bevorzugten Ausführungsform eines erfindungsgemäß eingesetzten Wirbelschichtreaktors, und
- Figur 2: die schematische Darstellung einer bevorzugten Ausführungsform von er- findungsgemäß eingesetzten Einbauten.

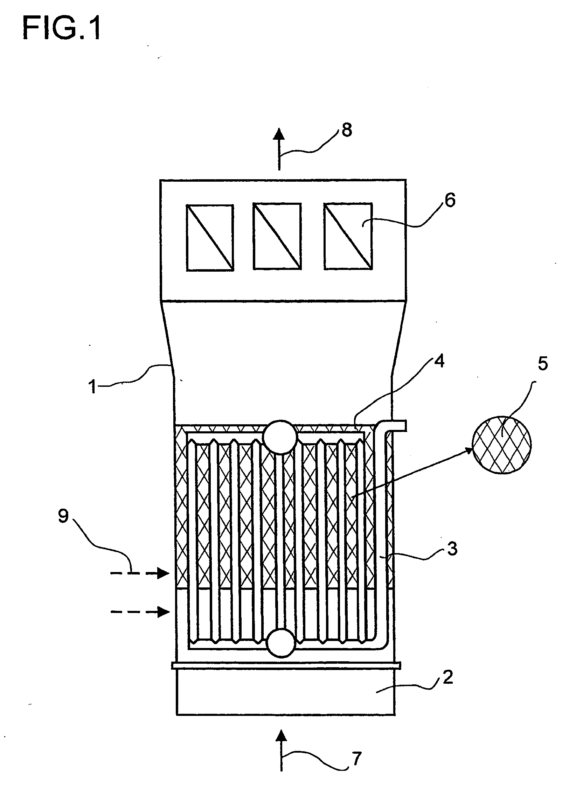

Der in Figur 1 dargestellte Wirbelschichtreaktor 1 umfasst eine feststofffreie Gasverteilerzone 2, Einbauten 4, die Zellen 5 ausbilden, mit einem Wärmeübertrager 3 im Bereich der Einbauten 4.

Oberhalb der Reaktionszone erweitert sich der Reaktor und weist mindestens einen Feststoffabscheider 6 auf. Der Pfeil 7 gibt die Zuführung der gasförmigen Einsatzstoffe und der Pfeil 8 die Abführung des gasförmigen Produktstromes an. Zusätzliche flüssigphasige Edukte können seitlich, über die gestrichelten Pfeile 9, zugegeben werden.

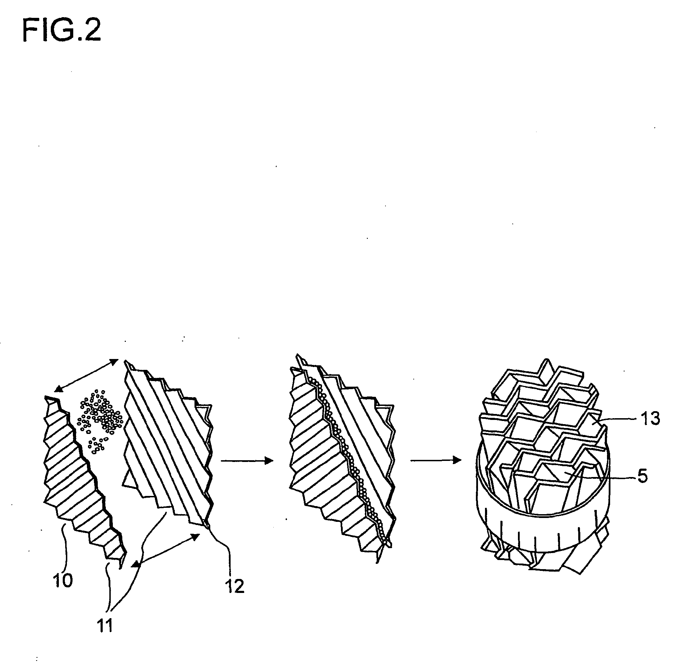

Figur 2 stellt eine bevorzugte Ausführungsform von erfindungsgemäßen Einbauten 4 in Form einer Kreuzkanalpackung dar, mit geknickten Metallblechen 10, die parallel zueinander in Längsrichtung angeordnet sind, mit Knickkanten 11, die das Metallblech 10 in Knickflächen 12 unterteilen und wobei zwei aufeinander folgende Metallbleche so angeordnet sind, dass sie den gleichen Neigungswinkel, jedoch mit umgekehrten Vorzeichen aufweisen und dabei Zellen 4 ausbilden, die in vertikaler Richtung durch Engstellen 13 begrenzt werden.

## Patentansprüche

1. Verfahren zur Herstellung von Chlor in einem Wirbelschichtreaktor (1), wobei ein gasförmiges Reaktionsgemisch (7), enthaltend Chlorwasserstoff und Sauerstoff, einen heterogenen partikelförmigen, die Wirbelschicht ausbildenden Katalysator von unten nach oben durchströmt, **dadurch gekennzeichnet, dass** in der Wirbelschicht Einbauten (4) angeordnet sind, die die Wirbelschicht in eine Mehrzahl von horizontal sowie eine Mehrzahl von vertikal im Wirbelschichtreaktor angeordneten Zellen (5) aufteilen, mit Zellwänden, die gasdurchlässig sind und die Öffnungen aufweisen, die eine Austaüschzahl des heterogenen, partiketförmigen Katalysators in vertikaler Richtung im Bereich von 1 bis 100 Litern/Stunde pro Liter Reaktorvolumen gewährleisten und dass die Einbauten (4) als Kreuzkanalpackung ausgebildet sind, mit in vertikaler Richtung im Wirbelschichtreaktor (1) parallel zueinander angeordneten geknickten gasdurchlässigen Metallblechen (10), Streckmetall- oder Gewebelagen, mit Knickkanten (11), die Knickflächen (12) mit einem von Null verschiedenen Neigungswinkel zur Vertikalen ausbilden, und wobei die Knickflächen (12) aufeinander folgender Metallbleche (10), Streckmetall- oder Gewebelagen den gleichen Neigungswinkel, jedoch mit umgekehrten Vorzeichen aufweisen und **dadurch** Zellen (5) ausbilden, die in vertikaler Richtung durch Engstellen (13) zwischen den Knickkanten (11) begrenzt werden.

2. Verfahren nach Anspruch 1, **dadurch gekennzeichnet, dass** als heterogener partikelförmiger Katalysator ein geträgerter oder ungeträgerter Katalysator, enthaltend eine oder mehrere Ruthenium-, Kupfer- oder Chromverbindungen, eingesetzt wird.

3. Verfahren nach Anspruch 1 oder 2, **dadurch gekennzeichnet, dass** die Öffnungen in den Zellwänden der im Wirbelschichtreaktor (1) angeordneten Zellen (5) eine Austauschzahl des heterogenen partikelförmigen Katalysators in vertikaler Richtung im Bereich von 10 bis 50 Litern/Stunde pro Liter Reaktorvolumen und in horizontaler Richtung von 0 oder im Bereich von 10 bis 50 Litern/Stunde pro Liter Reaktorvolumen, gewährleisten.

4. Verfahren nach Anspruch 1, **dadurch gekennzeichnet, dass** die Neigungswinkel der Knickflächen (12) zur Vertikalen im Bereich von 10 bis 80°, bevorzugt zwischen 20 und 70°, besonders bevorzugt zwischen 30 und 60°, liegen.

5. Verfahren nach einem der Ansprüche 1 bis 4, **dadurch gekennzeichnet, dass** die Zellen (5) der Einbauten (4) einen hydraulischen Durchmesser, gemessen mittels radioaktiver Tracertechnik, zwischen 100 und 5 mm, bevorzugt zwischen 50 und 5 mm, aufweisen.

6. Verfahren nach einem der Ansprüche 1 bis 5, **dadurch gekennzeichnet, dass** die Zellen (5) der Einbauten (4) eine mittlere Höhe, gemessen in vertikaler Richtung im Wirbelbettreaktor mittels radioaktiver Tracertechnik, zwischen 100 und 3 mm, bevorzugt zwischen 40 und 5 mm, aufweisen.

7. Verfahren nach einem der Ansprüche 1 bis 6, **dadurch gekennzeichnet, dass** die Knickflächen (12) in den Metallblechen (10), Streckmetall- oder Gewebelagen eine Knickhöhe im Bereich zwischen 100 und 3 mm, besonders bevorzugt zwischen 40 und 5 mm, und der Abstand der Engstellen zwischen den Knickkanten (11)Werte im Bereich zwischen 50 und 2 mm, besonders bevorzugt zwischen 20 und 3 mm, aufweist.

8. Verfahren nach einem der Ansprüche 1 bis 7, **dadurch gekennzeichnet, dass** in die Einbauten (4) Wärmeübertrager (3) eingebracht sind.

9. Verfahren nach Anspruch 8, **dadurch gekennzeichnet, dass** die Wärmeübertrager (3) platten- oder rohrförmig ausgebildet sind.

10. Verfahren nach einem der Ansprüche 1 bis 9, **dadurch gekennzeichnet, dass** die Einbauten (4) aus Metall-, Keramik-, Polymer oder Glaswerkstoffen gebildet sind.

11. Verfahren nach einem der Ansprüche 1 bis 10, **dadurch gekennzeichnet, dass** die Einbauten (4) 10 bis 90 Volumenprozent der Wirbelschicht in Zellen (5) unterteilen.

12. Verfahren nach Anspruch 11, **dadurch gekennzeichnet, dass** der untere Bereich der Wirbelschicht in Durchströmungsrichtung des gasförmigen Reaktionsgemisches (7) von Einbauten (4) frei ist.

13. Verfahren nach Anspruch 8 oder 9, **dadurch gekennzeichnet, dass** die Einbauten (4), die die Wirbelschicht in Zellen (5) aufteilen, oberhalb der Wärmeübertrager (3) angeordnet sind.

## Claims

1. A process for preparing chlorine in a fluidized-bed reactor (1), in which a gaseous reaction mixture (7) comprising hydrogen chloride and oxygen flows from the bottom upward through a heterogeneous particulate catalyst forming the fluidized bed, wherein the fluidized bed has internals (4) arranged in it which divide the fluidized bed into a plurality of cells (5) arranged horizontally in the fluidized-bed reactor and a plurality of cells (5) arranged vertically in the fluidized-bed reactor, with the cells having cell walls which are permeable to gas and have openings which ensure an exchange number of the heterogeneous, particulate catalyst in the vertical direction in the range from 1 to 100 liters/hour per liter of reactor volume, and the internals (4) are configured as cross-channel packing having creased gas-permeable metal sheets (10), expanded metal sheets or woven meshes which are arranged in parallel to one another in the vertical direction in the fluidized-bed reactor (1) and have creases (11) which form flat areas (12) between the creases having an angle of inclination to the vertical which is different from zero, with the flat areas (12) between the creases of successive metal sheets (10), expanded metal sheets or woven meshes having the same angle of inclination but with the opposite sign so as to form cells (5) which are delimited in the vertical direction by constrictions (13) between the creases (11).

2. The process according to claim 1, wherein a supported or unsupported catalyst comprising one or more ruthenium, copper or chromium compounds is used as heterogeneous particulate catalyst.

3. The process according to claim 1 or 2, wherein the openings in the cell walls of the cells (5) arranged in the fluidized-bed reactor (1) ensure an exchange number of the heterogeneous particulate catalyst in the vertical direction in the range from 10 to 50 liters/hour per liter of reactor volume and in the horizontal direction of 0 or in the range from 10 to 50 liters/hour per liter of reactor volume.

4. The process according to claim 1, wherein the angle of inclination to the vertical of the flat areas (12) between the creases is in the range from 10 to 80°, preferably from 20 to 70°, particularly preferably from 30 to 60°.

5. The process according to any of claims 1 to 4, wherein the cells (5) of the internals (4) have a hydraulic diameter measured by means of the radioactive tracer technique of from 100 to 5 mm, preferably from 50 to 5 mm.

6. The process according to any of claims 1 to 5, wherein the cells (5) of the internals (4) have an average height, measured in the vertical direction in the fluidized-bed reactor by means of the radioactive tracer technique, in the range from 100 to 3 mm, preferably from 40 to 5 mm.

7. The process according to any of claims 1 to 6, wherein the flat areas (12) between the creases in the metal sheets (10), expanded metal or woven mesh layers have a crease height in the range from 100 to 3 mm, particularly preferably from 40 to 5 mm, and the spacing of the constrictions between the creases (11) is in the range from 50 to 2 mm, particularly preferably from 20 to 3 mm.

8. The process according to any of claims 1 to 7, wherein heat exchangers (3) are installed in the internals (4).

9. The process according to claim 8, wherein the heat exchangers (3) are configured in the form of plates or tubes.

10. The process according to any of claims 1 to 9, wherein the internals (4) are made of metal, ceramic, polymer or glass materials.

11. The process according to any of claims 1 to 10, wherein the internals (4) divide from 10 to 90% by volume of the fluidized bed into cells (5).

12. The process according to claim 11, wherein the lower region of the fluidized bed in the flow direction of the gaseous reaction mixture (7) is free of internals (4).

13. The process according to claim 8 or 9, wherein the internals (4) which divide the fluidized bed into cells (5) are located above the heat exchangers (3).

## Revendications

1. Procédé de fabrication de chlore dans un réacteur à lit fluidisé (1), un mélange réactionnel gazeux (7), qui contient du chlorure d'hydrogène et de l'oxygène, traversant du bas vers le haut un catalyseur hétérogène particulaire qui forme le lit fluidisé, **caractérisé en ce que** des composants internes (4) sont disposés dans le lit fluidisé, qui divisent le lit fluidisé en une pluralité de cellules (5) disposées horizontalement et verticalement dans le réacteur à lit fluidisé, les parois desdites cellules étant perméables aux gaz et comportant des ouvertures qui assurent un taux d'échange du catalyseur hétérogène particulaire dans la direction verticale dans la plage allant de 1 à 100 litres/heure par litre du volume du réacteur, et **en ce que** les composants internes (4) forment un garnissage en canaux croisés, avec, dans la direction verticale dans le réacteur à lit fluidisé (1), des tôles métalliques (10), des couches de métal déployé ou de tissu, perméables aux gaz, pliées et placées parallèlement les unes aux autres, avec des arêtes de pliage (11) qui forment des surfaces de pliage (12) ayant un angle d'inclinaison par rapport à la verticale différent de zéro, les surfaces de pliage (12) de tôles métalliques (10), couches de métal déployé ou de tissu,
métalliques (10), couches de métal déployé ou de tissu, successives présentant le même angle d'inclinaison, avec toutefois des signes inverses, et formant ainsi des cellules (5) qui sont limitées dans la direction verticale par des points étroits (13) entre les arêtes de pliage (11).

2. Procédé selon la revendication 1, **caractérisé en ce qu'**un catalyseur supporté ou non supporté contenant un ou plusieurs composés de ruthénium, de cuivre ou de chrome est utilisé en tant que catalyseur hétérogène particulaire.

3. Procédé selon la revendication 1 ou 2, **caractérisé en ce que** les ouvertures dans les parois cellulaires des cellules (5) placées dans le réacteur à lit fluidisé (1) assurent un taux d'échange du catalyseur hétérogène particulaire dans la direction verticale dans la plage allant de 10 à 50 litres/heure par litre de volume du réacteur et dans la direction horizontale de 0 ou dans la plage allant de 10 à 50 litres/heure par litre de volume du réacteur.

4. Procédé selon la revendication 1, **caractérisé en ce que** l'angle d'inclinaison des surfaces de pliage (12) par rapport à la verticale se situe dans la plage allant de 10 à 80°, de préférence est compris entre 20 et 70°, de manière particulièrement préférée entre 30 et 60°.

5. Procédé selon l'une quelconque des revendications 1 à 4, **caractérisé en ce que** les cellules (5) des composants internes (4) présentent un diamètre hydraulique, mesuré par une technique de traçage radioactif, compris entre 100 et 5 mm, de préférence entre 50 et 5 mm.

6. Procédé selon l'une quelconque des revendications 1 à 5, **caractérisé en ce que** les cellules (5) des composants internes (4) présentent une hauteur moyenne, mesurée dans la direction verticale dans le réacteur à lit fluidisé par une technique de traçage radioactif, comprise entre 100 et 3 mm, de préférence entre 40 et 5 mm.

7. Procédé selon l'une quelconque des revendications 1 à 6, **caractérisé en ce que** les surfaces de pliage (12) des tôles métalliques (10), couches de métal déployé ou de tissu, présentent une hauteur de pliage comprise entre 100 et 3 mm, de manière particulièrement préférée entre 40 et 5 mm, et la distance des points étroits entre les arêtes de pliage (11) présente des valeurs comprises entre 50 et 2 mm, de manière particulièrement préférée entre 20 et 3 mm.

8. Procédé selon l'une quelconque des revendications 1 à 7, **caractérisé en ce que** des échangeurs de chaleur (3) sont placés dans les composants internes (4).

9. Procédé selon la revendication 8, **caractérisé en ce que** les échangeurs de chaleur (3) sont de forme plate ou tubulaire.

10. Procédé selon l'une quelconque des revendications 1 à 9, **caractérisé en ce que** les composants internes (4) sont formés à partir de matériaux métalliques, céramiques, polymères ou de verre.

11. Procédé selon l'une quelconque des revendications 1 à 10, **caractérisé en ce que** les composants internes (4) divisent 10 à 90 pourcent en volume du lit fluidisé en cellules (5).

12. Procédé selon la revendication 11, **caractérisé en ce que** la zone inférieure du lit fluidisé dans la direction de l'écoulement du mélange réactionnel gazeux (7) est exempte de composants internes (4).

13. Procédé selon la revendication 8 ou 9, **caractérisé en ce que** les composants internes (4) qui divisent le lit fluidisé en cellules (5) sont placés au-dessus des échangeurs de chaleur (3).
